(19) Europäisches Patentamt
European Patent Office
Office européen des brevets

(11) Publication number: **0 429 662 A1**

(12) **EUROPEAN PATENT APPLICATION published in accordance with Art. 158(3) EPC**

(21) Application number: **90907500.4**

(22) Date of filing: **25.05.90**

(86) International application number: **PCT/JP90/00675**

(87) International publication number: **WO 90/15117 (13.12.90 90/28)**

(51) Int. Cl.5: **C09K 19/54**, G02F 1/13, G02F 1/137

(30) Priority: **27.05.89 JP 134238/89**

(43) Date of publication of application: **05.06.91 Bulletin 91/23**

(84) Designated Contracting States: **CH DE FR GB LI Bulletin**

(71) Applicant: **MITSUBISHI KASEI CORPORATION**
**5-2, Marunouchi 2-chome Chiyoda-ku**
**Tokyo 100(JP)**

(72) Inventor: **KANEKO, Masaharu 14-22,**
**Minamirinkan 7-chome**
**Yamato-shi**
**Kanagawa 242(JP)**
Inventor: **KADOWAKI, Masami 1-511,**
**Shimosakunobe 1900**
**Takatsu-ku Kawasaki-shi**
**Kanagawa 213(JP)**

(74) Representative: **Vossius & Partner**
**Siebertstrasse 4 P.O. Box 86 07 67**
**W-8000 München 86(DE)**

# (54) LIQUID CRYSTAL COMPOSITION AND LIQUID CRYSTAL ELEMENT.

(57) A liquid crystal composition comprising a liquid crystal compcund and at least one cyclic ether compound such as crown ether, azacrown, silacrown, cryptand, etc., and a liquid crystal element comprising said composition sandwiched in between two base plates at least one of which is provided with a transparent electrode. The invention is directed to providing a liquid crystal element undergoing less electrostatic hazards and a stable liquid crystal composition having a low resistivity for substantiating such an element.

EP 0 429 662 A1

# LIQUID CRYSTAL COMPOSITION AND LIQUID CRYSTAL ELEMENT

[Field of the Technique]

This invention relates to a liquid crystal composition for use in an liquid crystal element which is used in display elements and the like, and to a liquid crystal element using said liquid crystal composition.

[Background of the Technique]

Liquid crystal elements have been widely used because of the advantage that they can be driven at a low electric power and a low voltage. On the contrary, liquid crystal elements are liable to make an error due to static electricity, which has been a bar in panel assembly or mounting of the panel on a desk calculator, etc. and, in particular, caused a reduction in efficiency of finish test or quality identification.

That is, because a liquid crystal element produced from a liquid crystal composition containing impurities often suffers from defects in, for example, working life, sufficiently purified liquid crystal compositions are supplied to the market. Thus, liquid crystal compositions have a specific resistance usually on the level of from $10^{10}$ to $10^{14}$ Ω.cm similarly to other liquid substances.

In order to solve the problem arising from the above-mentioned susceptibility to the influence of static electricity, it has been attempted to add an organic ionic substance, such as a quaternary ammonium salt, to a commercially available liquid crystal composition having a relatively high specific resistance. However, such an organic ionic substance is poor in compatibility or solubility in general nonionic liquid crystal substances. Moreover, the substance is apt to be adsorbed onto the vicinities of an inlet for injection of a liquid crystal cell and thus encounters difficulty in uniform distribution in the cell.

[Disclosure of the Invention]

An object of the present invention is to provide a liquid crystal element free from disturbances due to static electricity and a liquid crystal composition having low and stable specific resistance which realizes such a liquid crystal element.

The present invention relates to a liquid crystal composition characterized by containing a liquid crystal compound and at least one cyclic ether compound and to a liquid crystal element characterized by comprising a pair of substrates at least one of which has a transparent electrode, with said liquid crystal composition being supported between said substrates.

[Brief Description of the Drawings]

Figure 1 illustrates a schematic cross section of a TN mode liquid crystal element according to the present invention with no applied voltage. In Fig. 1:-

1 Incident light
2 Polarizing sheet
3 Transparent glass substrate
4 Transparent electrode
5 Orientation film
6 Liquid crystal composition

Figure 2 illustrates a schematic cross section of a TN mode liquid crystal element according to the present invention with an applied voltage. In Fig. 2:-

1 Incident light
2 Polarizing sheet
3 Transparent glass substrate
4 Transparent electrode
5 Orientation film
6 Liquid crystal composition

[Preferred Embodiment of the Invention]

The present invention is now explained in detail.

The liquid crystal composition according to the present invention contains a small amount of a cyclic

ether compound so as to have markedly reduced specific resistance.

Examples of the cyclic ether compounds include those described in Koga Kenji, <u>Yuki Gosei Kagaku</u>, Vol. 33, No. 3, pp. 163-170, "Macrocyclic Polyethers" (1975).

More specifically, the oyclic ether compounds include those represented by formula (I):

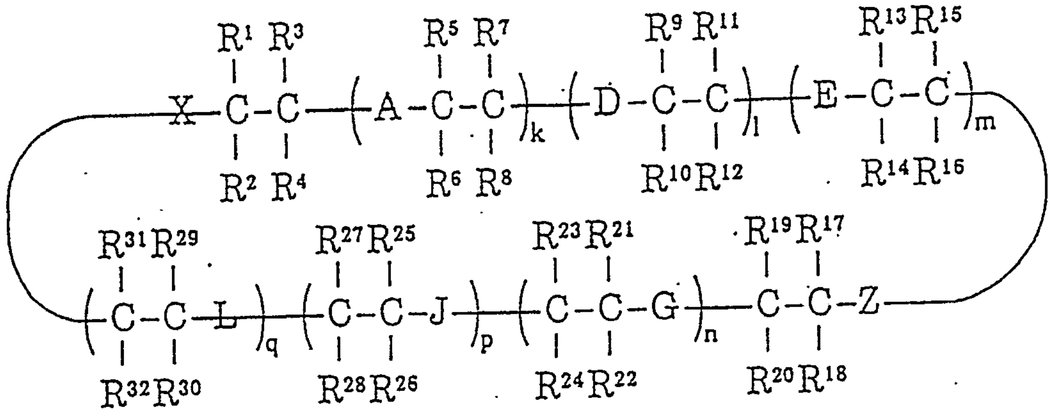

(I)

wherein $R^1$ to $R^{32}$ each represents a hydrogen atom, an alkyl group, an alkoxy group, an alkoxyalkyl group, an arylalkyl group or an alkenyl group; a pair of $R^1$ and $R^3$, or $R^2$ and $R^4$, a pair of $R^5$ and $R^7$, or $R^6$ and $R^8$, a pair of $R^9$ and $R^{11}$, or $R^{10}$ and $R^{12}$, a pair of $R^{13}$ and $R^{15}$, or $R^{14}$ and $R^{16}$, a pair of $R^{17}$ and $R^{19}$, or $R^{18}$ and $R^{20}$, a pair of $R^{21}$ and $R^{23}$, or $R^{22}$ and $R^{24}$, a pair of $R^{25}$ and $R^{27}$, or $R^{26}$ and $R^{28}$, and a pair of $R^{29}$ and $R^{31}$, or $R^{30}$ and $R^{32}$ may each form a substituted or unsubstituted saturated aliphatic ring; or a group of $R^1$, $R^2$, $R^3$ and $R^4$, a group of $R^5$, $R^6$, $R^7$ and $R^8$, a group of $R^9$, $R^{10}$, $R^{11}$ and $R^{12}$, a group of $R^{13}$, $R^{14}$, $R^{15}$ and $R^{16}$, a group of $R^{17}$, $R^{18}$, $R^{19}$ and $R^{20}$, a group of $R^{21}$, $R^{22}$, $R^{23}$ and $R^{24}$, a group of $R^{25}$, $R^{26}$, $R^{27}$ and $R^{28}$, and a group of $R^{29}$, $R^{30}$, $R^{31}$ and $R^{32}$ may each form a substituted or unsubstituted aromatic ring.

A, D, E, G, J, L, X, and Z each represents an oxygen atom, a sulfur atom,

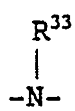 , 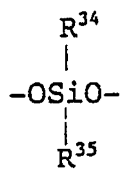 or 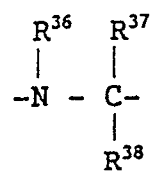

(wherein $R^{33}$ to $R^{38}$ each represents a hydrogen atom, an alkyl group, an alkoxy group, an alkoxyalkyl group, an arylalkyl group or an alkenyl group; or $R^{36}$ and $R^{37}$ may form a nitrogen-containing heterocyclic ring); provided that when

A, D, E, G, J, L, X or Z is 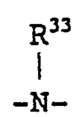 ,

$R^{33}$ may be connected to a substituent on the carbon atom adjacent to the group to form a nitrogen-containing heterocyclic ring.

Where X and Z both represent

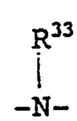 ,

with A, D, E, G, J and L representing other atoms or groups, $-R^{33}$ in X and Z are connected to each other to represent $-C_2H_4(OC_2H_4)_t-$ (wherein t represents an integer of from 1 to 5). Where X represents

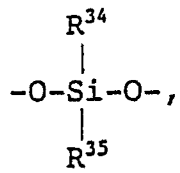 , A, D, E, G, J, L, and Z

each represents an oxygen atom.

k to q each represents 0 or an integer of from 1 to 5, provided that the sum of k to q does not exceed 12.

The cyclic ether compounds which can be used in the present invention specifically include those of formula (I) wherein A, D, E, G, J, and L represent an oxygen atom. Of these compounds, those wherein X and Z also represent an oxygen atom are explained below.

In these compounds, it is preferable that $R^1$ to $R^{32}$ each represents a hydrogen atom; or a pair of $R^1$ and $R^3$, or $R^2$ and $R^4$and/or a pair of $R^{17}$ and $R^{19}$, or $R^{18}$ and $R^{20}$ are each connected together to form a substituted or unsubstituted saturated aliphatic ring; or at least one of a group of $R^1$, $R^2$, $R^3$ and $R^4$ and a group of $R^{17}$, $R^{18}$, $R^{19}$ and $R^{20}$ are taken together to form a substituted or unsubstituted aromatic ring.

More preferably, the above-described substituted or unsubstituted saturated aliphatic ring is a substituted or unsubstituted cyclohexyl group, and the substituted or unsubstituted aromatic ring is a substituted or unsubstituted phenyl group.

It is preferable that the sum of k, l, and m (k+l+m) and the sum of n, p, and q (n+p+q) are equal.

The sum of k to q is preferably between 2 and 8. More preferably, the sum of k to q is between 1 and 4, or the sum of k, l, and m (k+l+m) or the sum of n, p, and q (n+p+q) is between 1 and 4.

Specific examples of these compounds are 12-crown-4 (1,4,7,10-tetraoxacyclododecane), 15-crown-5 (1,4,7,10,13-pentaoxacyclopentadecane), 18-crown-6 (1,4,7,10,13,16-hexaoxacyclooctadecane), benzo-12-crown-4, benzo-15-crown-5, dibenzo-12-crown-4, dibenzo-18-crown-6, dibenzo-24-crown-8, dicyclohexano-18-crown-6, dicyclohexano-24-crown-8, and bis-alkyl-substituted benzo-crown ethers, e.g., 2,3,11,12-bis[4',4''-(or 4',5''-)octadecylbenzo]-18-crown-6, 2,3,11,12-bis[4',4''-(or 4',5''-)butylbenzo]-18-crown-6, and 2,3,11,12-bis[4',4''-(or 4',5''-)octylbenzo]-18-crown-6.

The compounds wherein A, D, E, G, J, and L each represents an oxygen atom; and X and Z each represents

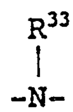

(wherein $R^{33}$ represents a hydrogen atom, an alkyl group, an alkoxy group, an alkoxyalkyl group, an arylalkyl group or an alkenyl group; or $R^{33}$ in X and Z are taken together to form $-C_2H_4(OC_2H_4)_t-$ (wherein t represents an integer of from 1 to 5)) are explained below.

In these compounds, it is preferable that $R^1$ to $R^{32}$ each represents a hydrogen atom; or k, m, n and q are equal, l and p each represents 1, and a pair of $R^9$ and $R^{11}$, or $R^{10}$ and $R^{12}$ and/or a pair of $R^{25}$ and $R^{27}$, or $R^{26}$ and $R^{28}$ are connected to each other to form a substituted or unsubstituted saturated aliphatic ring ; or at least one of a group of $R^9$, $R^{10}$, $R^{11}$ and $R^{12}$ and a group of $R^{25}$, $R^{26}$, $R^{27}$ and $R^{28}$ are taken together to form a substituted or unsubstituted aromatic ring.

More preferably, the substituted or unsubstituted saturated aliphatic ring is a substituted or unsubstituted cyclohexyl group, and the substituted or unsubstituted aromatic ring is a substituted or unsubstituted phenyl group.

It is preferably that the sum of k to q is between 2 and 8, and more preferably the sum of k to q is between 1 and 4, or the sum of k, l and m (k+l+m) or the sum of n, p and q (n+p+q) is from 1 to 4.

Specific examples of these compounds are cryptands, such as 1,4,10-trioxa-7,13-diazacyclopentadecane, 1,7,10,16-tetraoxa-4,13-diazacyclooctadecane,4,13-didecyl-1,7,10,16-tetraoxa-4,13-diazacyclooctadecane, 1,7,10,13,19-pentaoxa-4,16-diazacycloheneicosane, 4,7,13,18-tetraoxa-1,10-diazabicyclo[8,5,5]-

eicosane, 4,7,13,16,21-pentaoxa-1,10-diazabicyclo[8,8,5]tricosane, 5-decyl-4,7,13,16,21-pentaoxa-1,10-diazabicyclo[8,8,5]tricosane, 4,7,13,16,21,24-hexaoxa-1,10-diazabicyclo[8,8,8]hexacosane, 5,6-benzo-4,7,13,16,21,24-hexaoxa-1,10-diazabicyclo[8,8,8]hexacosane,5,6-14,15-dibenzo-4,7,13,16,21,24-hexaoxa-1,10-diazabicyclo[8,8,8]hexacosane, and 5-decyl-4,7,13,16,21,24-hexaoxa-1,10-diazabicyclo[8,8,8]-hexacosane.

The compounds wherein A, D, E, G, J and L each represents an oxygen atom; X represents

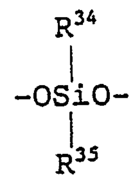

(wherein $R^{34}$ and $R^{35}$ are as defined above); and Z represents an oxygen atom are then explained below.

In these compounds, $R^{34}$ and $R^{35}$ each preferably represents a hydrogen atom, an alkyl group, an alkoxy group or an alkenyl group.

$R^1$ to $R^{32}$ each preferably represents a hydrogen atom.

The sum of k to q is preferably from 0 to 6.

Specific examples of these compounds are silacrowns, e.g., 1,1-dimethylsila-8-crown-3, 1,1-dimethylsila-11-crown-4, 1,1-dimethylsila-14-crown-5, 1,1-dimethylsila-17-crown-6, 1,1-dimethylsila-20-crown-7, 1,1-vinylmethylsila-14-crown-5, 1,1-vinylmethylsila-17-crown-6,1,1-methoxymethylsila-17-crown-6, and 1,1-phenylmethylsila-14-crown-5.

Where A, D, E, G, J and L each represents an oxygen atom, those compounds wherein X and/or Z represent a sulfur atom are also preferably used in the present invention.

Further, the compounds wherein A, D, E, G, J, L, X, and Z each represents

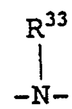

(wherein $R^{33}$ represents a hydrogen atom, an alkyl group, an alkoxy group, an alkoxyalkyl group, an arylalkyl group or an alkenyl group, or $R^{33}$ in X and Z may be taken together to form $-C_2H_4(OC_2H_4)_t-$ (wherein t represents an integer of from 1 to 5)) are also preferably used in the present invention.

In these compounds, the sum of k to q preferably ranges from 0 to 8.

Likewise, the compounds wherein A, D, E, J, G, L, X and Z each represents

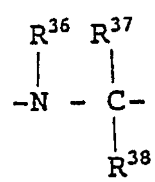

(wherein $R^{36}$ to $R^{38}$ each represents a hydrogen atom, an alkyl group, an alkoxy group, an alkoxyalkyl group, an arylalkyl group or an alkenyl group) are preferably used in the present invention.

In these compounds, it is preferable that $R^{36}$ represents a hydrogen atom or an alkyl group; $R^{37}$ and $R^{38}$ each represents a hydrogen atom; and $R^1$ to $R^{32}$ each represents a hydrogen atom. Further, the sum of k to q is preferably from 0 to 8.

Other preferred compounds include those wherein k and n each represents 1; l and m and/or p and q both represent 0 or 1; A, E, G and L each represents

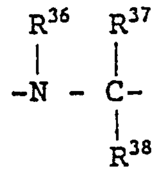 ;

and X, D, Z and J each represents

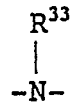

(wherein $R^{33}$ and $R^{36}$ to $R^{38}$ each represents a hydrogen atom, an alkyl group, an alkoxy group, an alkoxyalkyl group, an arylalkyl group or an alkenyl group, or $R^{33}$ in X and Z are taken together to form $-C_2H_4(OC_2H_4)_t-$ (wherein t represents an integer of from 1 to 5)).

In these compounds, it is preferable that $R^{36}$ represents a hydrogen atom or an alkyl group, $R^{37}$ and $R^{38}$ each represents a hydrogen atom, and $R^1$ to $R^{32}$ each represents a hydrogen atom.

Further, the sum of k to q is preferably from 0 to 8.

In addition, the compounds wherein k and m both represent 1; l and n both represent 2; p and q both represent 2 or 0; D, G, and L each represents

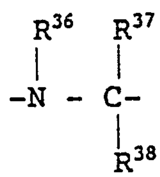 ;

and X, A, E, Z, and J each represents

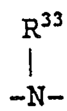

(wherein $R^{33}$ and $R^{35}$ to $R^{38}$ each represents a hydrogen atom, an alkyl group, an alkoxy group, an alkoxyalkyl group, an arylalkyl group or an alkenyl group, or $R^{33}$ in X and Z may be taken together to form $-C_2H_4(OC_2H_4)_t-$ (wherein t represents an integer of from 1 to 5)) are preferably used in the present invention.

Specific examples of the above-described compounds wherein A, D, E, G, J, L, X, and Z each represents

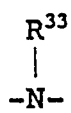

or

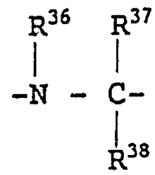

include, for example, azacrowns, e.g., 1,4,7-triazacyclononane, 1,4,7,10-tetraazacyclododecane, 1,4,8,11-tetraazacyclotetradecane, and 1,4,8,11-tetramethyl-1,4,8,11-tetraazacyclotetradecane.

Liquid crystals which can be used in the present invention include various liquid crystal compounds shown in Table 1 below and mixtures thereof.

TABLE 1

| No. | Type | Example |
|---|---|---|
| 1 | Cyclohexyl-cyclohexane type | 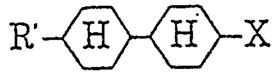 |
| 2 | Phenylcyclo-hexane type | 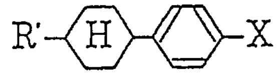 |
| 3 | Biphenyl type | 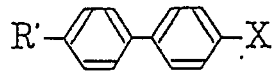 |
| 4 | Terphenyl type | 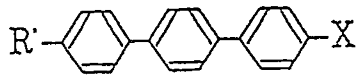 |
| 5 | Cyclohexyl-cyclohexanoate type | 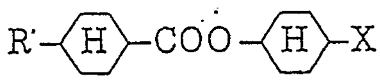 |
| 6 | Phenylcyclo-hexylcarboxylate type | 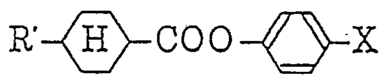 |
| 7 | Ester type | 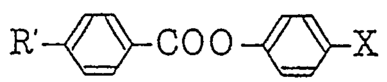 |
| 8 | Diester type | 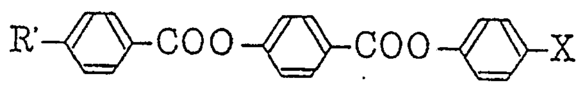 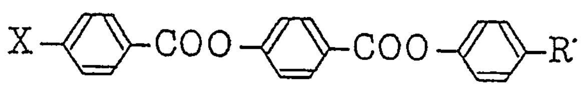 |
| 9 | Cyclohexyl-biphenyl type | 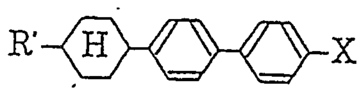 |
| 10 | Biphenylcyclo-hexylcarboxylate type | 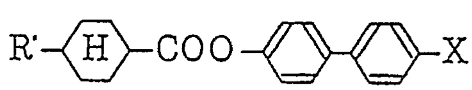 |

/To be cont'd.

TABLE 1 (cont'd.)

| No. | Type | Example |
|---|---|---|
| 11 | Biphenyl ester type | 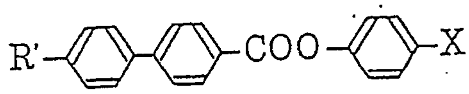 |
| | | 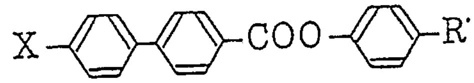 |
| 12 | Thioester type | 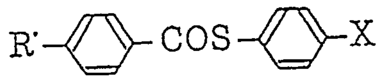 |
| 13 | Schiff type | 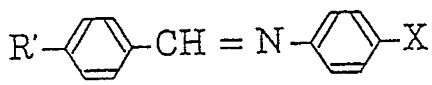 |
| | | 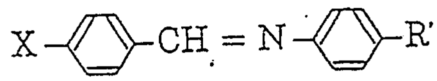 |
| 14 | Pyrimidine type | 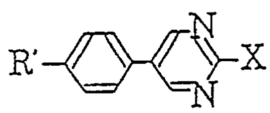 |
| | | 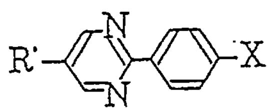 |
| | | 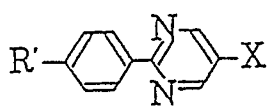 |
| | | 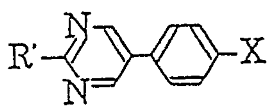 |
| 15 | Dioxane type | 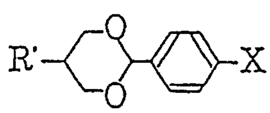 |

/To be cont'd.

TABLE 1 (cont'd.)

| No. | Type | Example |
|---|---|---|
| 16 | Cyclohexyl methyl ether type | 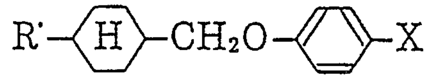 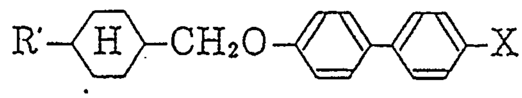 |
| 17 | Cinnamonitrile type | 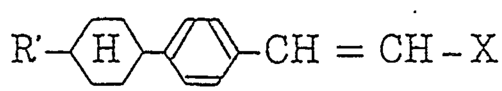 |
| 18 | Pyridazine type compound | 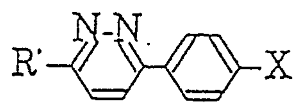 |
| 19 | Bibenzyl type compound | 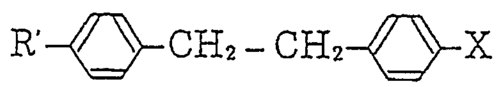 |
| 20 | Pyridine type compound | 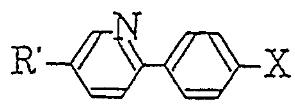 |

In the above formulae, R' and X each represents an alkyl group, an alkoxyalkyl group, an alkoxy group, an alkylphenyl group, an alkoxyalkylphenyl group, an alkoxyphenyl group, an alkylcyclohexyl group, an alkoxyalkylcyclohexyl group, an alkylcyclohexylphenyl group, a cyanophenyl group, a cyano group, a nitro group, a halogen atom, an alkoxycarbonyl group, an alkoxyalkoxycarbonyl group, an alkylphenoxycarbonyl group, an alkoxyalkylphenoxycarbonyl group, an alkoxyphenoxycarbonyl group, an alkylcyclohexyloxycarbonyl group, an alkoxycyclohexyloxycarbonyl group, an alkylcyclohexylphenoxycarbonyl group, a cyanophenoxycarbonyl group, a halogenophenoxycarbonyl group, an alkylphenylalkyl group, an alkoxyalkylphenylalkyl group, an alkylcyclohexylalkyl group, an alkoxyalkoxycyclohexylalkyl group, an alkoxyphenylalkyl group, an alkylcyclohexylphenylalkyl group, or a cyanophenylalkyl group. In these groups, the alkyl chain or alkoxy chain may have an optically active center. The phenyl group or phenoxy group in R' or X may be substituted with a halogen atom, e.g., a fluorine atom and a chlorine atom. The phenyl group or pyridine ring in the formulae may be substituted with one or two halogen atom(s), e.g., a fluorine atom and a chlorine atom.

While each of the liquid crystals shown in Table 1 shows positive dielectric anisotropy, known liquid crystals having negative dielectric anisotropy, including ester type, azoxy type, azo type, Schiff type, pyrimidine type, diester type and biphenyl ester type, can be mixed with liquid crystals having positive dielectric anisotropy to provide a liquid crystal composition showing positive dielectric anisotropy as a whole. It is a matter of course that even liquid crystals showing negative dielectric anisotropy can be used as such by selecting an appropriate element structure and an appropriate driving system.

Specific examples of the above-described liquid crystal compounds which can be used in the present invention include, for example, various liquid crystal compounds described, e.g., in Japan Society for the Promotion of Science, The 142nd Committee (ed.), Liquid Crystal Device Handbook, pp. 715-719, Nikkan Kogyo Shinbunsha.

Preferred among them are liquid crystal compositions mainly comprising biphenyl compounds or phenylcyclohexane compounds in view of their availability on the market. In particular, phenylcyclohexane compounds are practical.

The crown ethers used in the present invention are added to liquid crystals in such concentrations that do not give appreciable influences on a transition temperature to an isotropic phase or stability of liquid crystals in precipitation, separation, and the like. In general, the crown ethers are added in an amount of

from 0.1 to 5.0% by weight, and preferably from 0.3 to 3.0% by weight, for reducing the specific resistance to a level of $10^9$ Ω.cm.

In the liquid crystal compositions of the present invention, the crown ethers may be used as a mixture of two or more different kinds thereof.

The liquid crystal compositions of the present invention can easily be obtained by mixing the crown ethers and liquid crystals in a known manner.

Optically active substances such as cholesteryl nonanoate, additives such as antioxidants, and dichroic dyes commonly employed in liquid crystal compositions may also be used in combination.

The dichroic dyes which can be used in the present invention include known dyes of anthraquinone type, azo type, azomethine type, quinophthalone type, perylene type, thioindigo type, naphthalimide type, and oxazine type, etc.

Specific examples of these dichroic dyes are those described in Liquid crystal Device Handbook, supra, pp. 195-196 and pp. 724-730.

The liquid crystal element according to the present invention comprises a pair of substrates at least one of which has a transparent electrode, with the above-mentioned liquid crystal composition being supported between the substrates each having an electrode, and includes known electric field effect modes such as a TN mode and a guest-host mode, and thermal recording modes (see Okano Koji and Kobayashi Shunsuke (ed.), Liquid Crystals, O-yo-hen, pp.13-47, Baihukan and J.L. Fergason, SID 85 Digest, p. 68 (1985)).

Preferred of these liquid crystal elements are electric field effect type elements using easily chargeable substrates, e.g., plastic films, such as a TN mode and a scatter control mode.

[EXAMPLES]

The present invention is now illustrated in greater detail by way of the following examples, but the present invention is not deemed to be limited thereto.

EXAMPLE 1

One gram of a crown ether (12-crown-4) represented by formula (I):

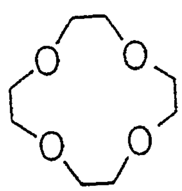

(I)

was dissolved in 100 g of a liquid crystal mixture comprising a phenylcyclohexane compound as a main component which is commercially sold under a trade name of ZLI-1565 (produced by E. Merck Co.) to prepare liquid crystal composition I. Liquid crystal composition I was injected in a 1 mℓ-volume electrode cell for liquids having an electrode gap of 1.5 mm ("LE-21" manufactured by Ando Denki). A microcurrent with an applied direct voltage of 10 V was measured by using a high-sensitivity vibrating reed type universal electrometer, and a specific resistance was calculated from the cell constant. As a result, the specific resistance of the liquid crystal mixture ZLI-1565 alone was $5 \times 10^{12}$ (Ω.cm), while that of liquid crystal composition I containing the crown ether of the present invention was found to be $6 \times 10^9$ (Ω.cm). Liquid crystal composition I was sealed into a cell composed of a pair of glass plates each having a transparent electrode on which a polyimide resin had been coated, cured, and subjected to a rubbing treatment at an electrode gap of 9 μm, the glass plates being assembled in such a manner that the liquid crystal might be orientated at a twist angle of 90°. A polarizing film was adhered to each glass plate in such a manner that the rubbing direction of the glass plate be in the same direction of the transmission axis of the polarizing film to thereby constitute a TN mode liquid crystal element shown in Figs. 1 and 2. On applying a square wave (5 V, 64 Hz), "light" and "shade" states were observed correspondingly to "on" and "off" of the voltage application, respectively.

EXAMPLE 2

One gram of the crown ether represented by formula (I) shown in Example 1 was dissolved in 100 g of

a liquid crystal mixture containing a phenylcyclohexane compound as a main component which is commercially sold under a trade name of ZLI-1132 (produced by E. Merck Co.) to prepare liquid crystal composition II. A specific resistance of liquid crystal composition II was measured in the same manner as in Example 1. As a result, the specific resistance of the liquid crystal mixture ZLI-1132 was 3 x $10^{10}$ (Ω.cm), while that of liquid crystal composition II was found to be 5 x $10^{8}$ (Ω.cm). A liquid crystal element was prepared in the same manner as in Example 1, except for using liquid crystal composition II. Upon application of a square wave (5 V, 64 Hz), the resulting liquid crystal element showed "light" and "shade" states in agreement with "on" and "off" of the voltage, respectively.

EXAMPLE 3

One gram of the crown ether represented by formula (I) shown in Example 1 was dissolved in 100 g of a liquid crystal mixture containing a cyclohexylcyclohexane compound as a main component which is commercially sold under a trade name of ZLI-3376-000(produced by E. Merck Co.) to prepare liquid crystal composition III. A specific resistance of liquid crystal composition III was measured in the same manner as in Example 1. As a result, the specific resistance of the liquid crystal mixture ZLI-3376-000 was 1 x $10^{13}$ (Ω.cm), while that of liquid crystal composition III was found to be 1 x $10^{10}$ (Ω.cm). A liquid crystal element was prepared in the same manner as in Example 1, except for using liquid crystal composition III. Upon application of a square wave (5 V, 64 Hz), the resulting liquid crystal element showed "light" and "shade" states in agreement with "on" and "off" of the voltage, respectively.

EXAMPLE 4

One gram of the crown ether represented by formula (I) shown in Example 1 was dissolved in 100 g of a liquid crystal mixture containing a phenylcyclohexane compound as a main component which is commercially sold under a trade name of ZLI-3651 (produced by E. Merck Co.) to prepare liquid crystal composition IV. A specific resistance of liquid crystal composition IV was measured in the same manner as in Example 1. As a result, the specific resistance of the liquid crystal mixture ZLI-3651 was 1 x $10^{13}$ (Ω.cm), while that of liquid crystal composition IV was found to be 9 x $10^{9}$ (Ω.cm). A liquid crystal element was prepared in the same manner as in Example 1, except for using liquid crystal composition IV. Upon application of a square wave (5 V, 64 Hz), the resulting liquid crystal element showed "light" and "shade" states in agreement with "on" and "off" of the voltage, respectively.

EXAMPLE 5

One gram of the crown ether represented by formula (I) shown in Example 1 was dissolved in 100 g of a liquid crystal mixture containing a biphenyl compound as a main component which is commercially sold under a trade name of E-8 (produced by BDH) to prepare liquid crystal composition V. A specific resistance of liquid crystal composition V was measured in the same manner as in Example 1. As a result, the specific resistance of the liquid crystal mixture E-8 was 3 x $10^{11}$ (Ω.cm), while that of liquid crystal composition V was found to be 6 x $10^{8}$ (Ω.cm). A liquid crystal element was prepared in the same manner as in Example 1, except for using liquid crystal composition V. Upon application of a square wave (5 V, 64 Hz), the resulting liquid crystal element showed "light" and "shade" states in agreement with "on" and "off" of the voltage, respectively.

EXAMPLE 6

The crown ether represented by formula (I) shown in Example 1 was dissolved in a liquid crystal mixture containing a phenylcyclohexane compound as a main component which is commercially sold under a trade name of ZLI-1565 (produced by E. Merck Co.) in a concentration of 0.3%, 0.5%, 3.0%, or 5.0% by weight to prepare four kinds of liquid crystal compositions. A specific resistance of each liquid crystal composition was measured in the same manner as in Example 1. The results obtained are shown in Table [1] below.

TABLE [1]

| | 6-1 | 6-2 | 6-3 | 6-4 |
|---|---|---|---|---|
| Crown ether concentration (wt%) | 0.3 | 0.5 | 3.0 | 5.0 |
| Specific resistance (Ω.cm) | $2x10^{10}$ | $2x10^{9}$ | $3x10^{9}$ | $2x10^{9}$ |

EXAMPLE 7

A crown ether (15-crown-5) represented by formula (II):

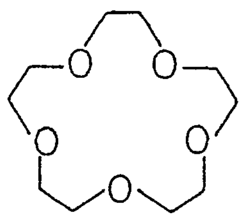

(II)

was dissolved in a liquid crystal mixture containing a phenylcyclohexane compound as a main component which is commercially sold under a trade name of ZLI-1565 (produced by E. Merck Co.) in a concentration of 0.1%, 0.5%, 1.0%, 3.0%, or 5.0% by weight to prepare five kinds of liquid crystal compositions. A specific resistance of each liquid crystal composition was measured in the same manner as in Example 1. The results obtained are shown in Table [2] below.

TABLE [2]

| | 7-1 | 7-2 | 7-3 | 7-4 | 7-5 |
|---|---|---|---|---|---|
| Crown ether concentration (wt%) | 0.1 | 0.5 | 1.0 | 3.0 | 5.0 |
| Specific resistance (Ω.cm) | $2x10^{10}$ | $5x10^{9}$ | $2x10^{9}$ | $1x10^{9}$ | $7x10^{8}$ |

EXAMPLE 8

A crown ether (18-crown-6) represented by formula (III):

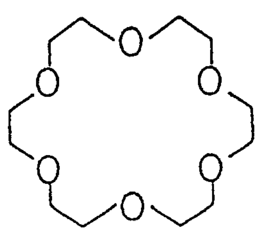

(III)

was dissolved in a liquid crystal mixture containing a phenylcyclohexane compound as a main component which is commercially sold under a trade name of ZLI-1565 (produced by E. Merck Co.) in a concentration of 0.5%, 1.0%, 3.0%, or 5.0% by weight to prepare four kinds of liquid crystal compositions. A specific resistance of each liquid crystal composition was measured in the same manner as in Example 1. The results obtained are shown in Table [3] below.

TABLE [3]

| | 8-1 | 8-2 | 8-3 | 8-4 |
|---|---|---|---|---|
| Crown ether concentration (wt%) | 0.5 | 1.0 | 3.0 | 5.0 |
| Specific resistance (Ω.cm) | $2x10^{10}$ | $2x10^{10}$ | $2x10^{10}$ | $1x10^{10}$ |

EXAMPLE 9

A crown ether (dicyclohexano-18-crown-6) represented by formula (IV):

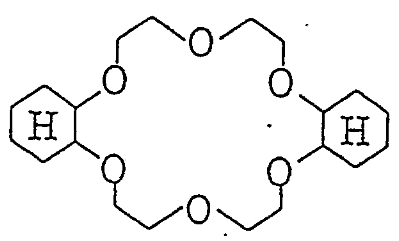

(IV)

was dissolved in a liquid crystal mixture containing a phenylcyclohexane compound as a main component which is commercially sold under a trade name of ZLI-1565 (produced by E. Merck Co.) in a concentration of 0.5%, 1.0%, 3.0%, or 5.0% by weight to prepare four kinds of liquid crystal compositions. A specific resistance of each liquid crystal composition was measured in the same manner as in Example 1. The results obtained are shown in Table [4] below.

TABLE [4]

| | 9-1 | 9-2 | 9-3 | 9-4 |
|---|---|---|---|---|
| Crown ether concentration (wt%) | 0.5 | 1.0 | 3.0 | 5.0 |
| Specific resistance (Ω.cm) | $7x10^{9}$ | $5x10^{9}$ | $2x10^{9}$ | $1x10^{9}$ |

EXAMPLE 10

A crown ether (dibenzo-18-crown-6) represented by formula (V):

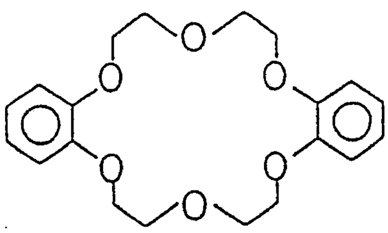

(V)

and the crown ether represented by formula (I) shown in Example 1 were dissolved in a liquid crystal mixture containing a biphenyl compound as a main component which is commercially sold under a trade name of E-8 (produced by BDH Co.) in a concentration of 0.2% and 0.8% by weight, respectively, to prepare liquid crystal composition X having a total crown ether concentration of 1% by weight. The specific resistance of the resulting composition was found to be 1 x $10^8$ (Ω.cm) as measured in the same manner as in Example 1.

EXAMPLE 11

The crown ether (dibenzo-18-crown-6) represented by formula (V) shown in Example 10 and the crown ether (18-crown-6) represented by formula (III) shown in Example 3 were dissolved in a liquid crystal mixture containing a biphenyl compound as a main component which is commercially sold under a trade name of E-8 (produced by BDH Co.) in a concentration of 0.2% and 0.8% by weight, respectively, to prepare liquid crystal composition XI having a total crown ether concentration of 1% by weight. The specific resistance of the resulting composition was found to be 6 x $10^8$ (Ω.cm) as measured in the same manner as in Example 1.

EXAMPLE 12

One gram of an azacrown (1,4,8,11-tetramethyl-1,4,8,11-tetraazacyclotetradecane) represented by formula (VI):

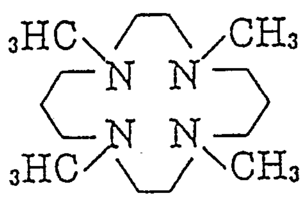

(VI)

was dissolved in 200 g of a liquid crystal mixture containing a phenylcyclohexane compound as a main component which is commercially sold under a trade name of ZLI-1565 (produced by E. Merck Co.) to prepare liquid crystal composition XII. As a result of specific resistance measurement in the same manner as in Example 1, the specific resistance of the liquid crystal mixture ZLI-1565 alone was 5 x $10^{12}$ (Ω.cm), while that of liquid crystal composition XII containing the azacrown of the present invention was found to be 3 x $10^{10}$ (Ω.cm). A TN mode liquid crystal element was prepared in the same manner as in Example 1, except for using liquid crystal composition XII. Upon application of a square wave (5 V, 64 Hz), the liquid crystal element was observed to display "light" and "shade" states in agreement with "on" and "off" of the voltage, respectively.

EXAMPLE 13

Liquid crystal composition XIII was prepared in the same manner as in Example 1, except for using 1 g of a cryptand (1,4,10-trioxa-7,13-diazacyclopentadecane) represented by formula (VII):

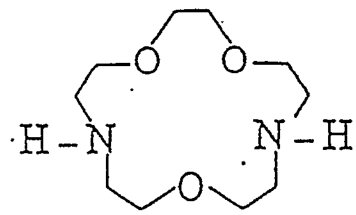

(VII)

As a result of specific resistance measurement in the same manner as in Example 1, the specific resistance of the liquid crystal mixture ZLI-1565 alone was 5 x $10^{12}$ (Ω.cm), while that of liquid crystal composition XIII containing the cryptand of the present invention was found to be 6 x $10^{9}$ (Ω.cm). A TN mode liquid crystal element was prepared in the same manner as in Example 1, except for using liquid crystal composition XIII. Upon application of a square wave (5 V, 64 Hz), the liquid crystal element displayed "light" and "shade" states in agreement with "on" and "off" of the voltage.

EXAMPLE 14

Liquid crystal composition XIV was prepared in the same manner as in Example 1, except for using 1 g of a cryptand (4,13-didecyl-1,7,10,16-tetraoxa-4,13-diazacyclooctadecane) represented by formula (VIII):

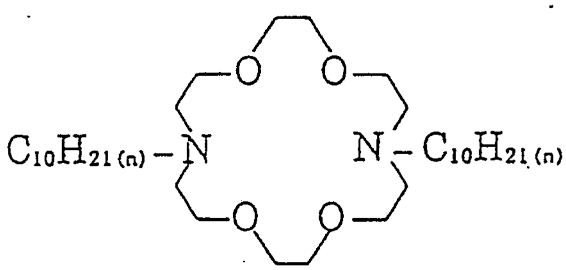

(VIII)

As a result of specific resistance measurement in the same manner as in Example 1, the specific resistance of liquid crystal composition XIV containing the cryptand of the present invention was found to be 4 x $10^{9}$ - (Ω.cm). A TN mode liquid crystal element was prepared in the same manner as in Example 1, except for using liquid crystal composition XIV. Upon application of a square wave (5 V, 64 Hz), the liquid crystal element displayed "light" and "shade" states in agreement with "on" and "off" of the voltage.

EXAMPLE 15

Liquid crystal composition XV was prepared in the same manner as in Example 1, except for using 1 g of a cryptand (4,7,13,18-tetraoxa-1,10-diazabicyclo[8,5,5]eicosane) represented by formula (IX):

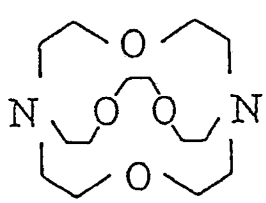

(IX)

As a result of specific resistance measurement in the same manner as in Example 1, the specific resistance of liquid crystal composition XV containing the cryptand of the present invention was found to be 9 x $10^{9}$ - (Ω.cm). A TN mode liquid crystal element was prepared in the same manner as in Example 1, except for using liquid crystal composition XV. Upon application of a square wave (5 V, 64 Hz), the liquid crystal element displayed "light" and "shade" states in agreement with "on" and "off" of the voltage.

EXAMPLE 16

Liquid crystal composition XVI was prepared in the same manner as in Example 1, except for using 1 g of a cryptand (4,7,13,16,21-pentaoxa-1,10-diazabicyclo[8,8,5]tricosane) represented by formula (X):

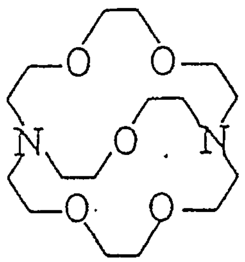

(X)

As a result of specific resistance measurement in the same manner as in Example 1, the specific resistance of liquid crystal composition XVI containing the cryptand of the present invention was found to be 6 x $10^9$ -(Ω.cm). A TN mode liquid crystal element was prepared in the same manner as in Example 1, except for using liquid crystal composition XVI. Upon application of a square wave (5 V, 64 Hz), the liquid crystal element displayed "light" and "shade" states in agreement with "on" and "off" of the voltage.

EXAMPLE 17

Liquid crystal composition XVII was prepared in the same manner as in Example 1, except for using 1 g of a silacrown (1,1-dimethylsila-11-crown-4) represented by formula (XI):

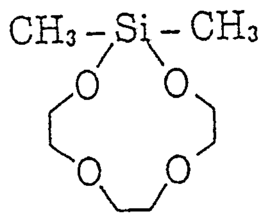

(XI)

As a result of specific resistance measurement in the same manner as in Example 1, the specific resistance of the liquid crystal mixture ZLI-1565 alone was 5 x $10^{12}$ (Ω.cm), while that of liquid crystal composition XVII containing the silacrown of the present invention was found to be 5 x $10^{10}$ (Ω.cm). A TN mode liquid crystal element was prepared in the same manner as in Example 1, except for using liquid crystal composition XVII. Upon application of a square wave (5 V, 64 Hz), the liquid crystal element displayed "light" and "shade" states in agreement with "on" and "off" of the voltage.

EXAMPLE 18

Liquid crystal composition XVIII was prepared in the same manner as in Example 1, except for using 1 g of a silacrown (1,1-dimethylsila-14-crown-5) represented by formula (XII):

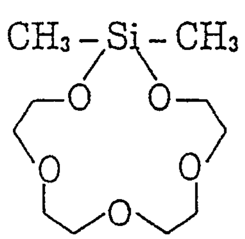

(XII)

As a result of specific resistance measurement in the same manner as in Example 1, the specific resistance

of liquid crystal composition XVIII containing the silacrown of the present invention was found to be 4 x $10^{10}$ (Ω.cm). A TN mode liquid crystal element was prepared in the same manner as in Example 1, except for using liquid crystal composition XVIII. Upon application of a square wave (5 V, 64 Hz), the liquid crystal element displayed "light" and "shade" states in agreement with "on" and "off" of the voltage.

Liquid crystal compositions and liquid crystal elements were prepared in the same manner as in Example 1 by using dichroic dyes, liquid crystal compositions, and the cyclic ether compounds according to the present invention as shown in Table 2 below. In each case, favorable results were obtained similarly to Example 1.

TABLE 2

| No. | Composition | Weight (g) |
|---|---|---|
| XIX | Dichroic dye (a)* | 2.5 |
| | Liquid crystal composition** | 100.0 |
| | Cyclic ether compound*** | 1.0 |
| XX | Dichroic dye (b)* | 1.5 |
| | Liquid crystal composition** | 100.0 |
| | Cyclic ether compound*** | 1.0 |

Note:

*: Dichroic Dyes:

(a)

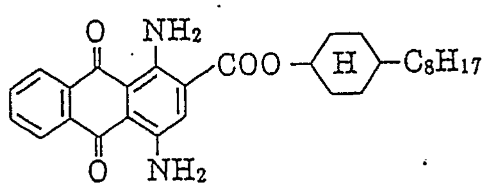

(b)

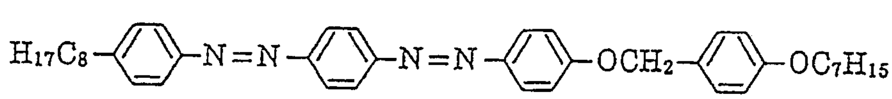

**: Liquid Crystal Composition:

(c) Trade Name: E-8 (produced by BDH)

(d) Trade Name: ZLI-1565 (produced by E. Merck)

***: Cyclic Ether Compound:

(e) 18-Crown-6

(f) 15-Crown-5

[INDUSTRIAL UTILITY]

The present invention provides a liquid crystal composition having a stable specific resistance value. In

cases where liquid crystal elements are constructed by using conventional liquid crystal compositions, when a voltage of about 10,000 V is applied to completely lighten, the time of lighting due to static electricity lasts from several minutes to several hours. On the contrary, in using the liquid crystal composition of the present invention, such a lighting time can be reduced to several seconds to several tens of seconds. Accordingly, the liquid crystal composition of the invention makes it possible to construct liquid crystal elements which undergoes reduced disturbances due to static electricity.

## Claims

1. A liquid crystal composition characterized by containing a liquid crystal compound and at least one cyclic ether compound.

2. A liquid crystal composition as described in Claim 1, characterized in that said cyclic ether compound is represented by formula (I):

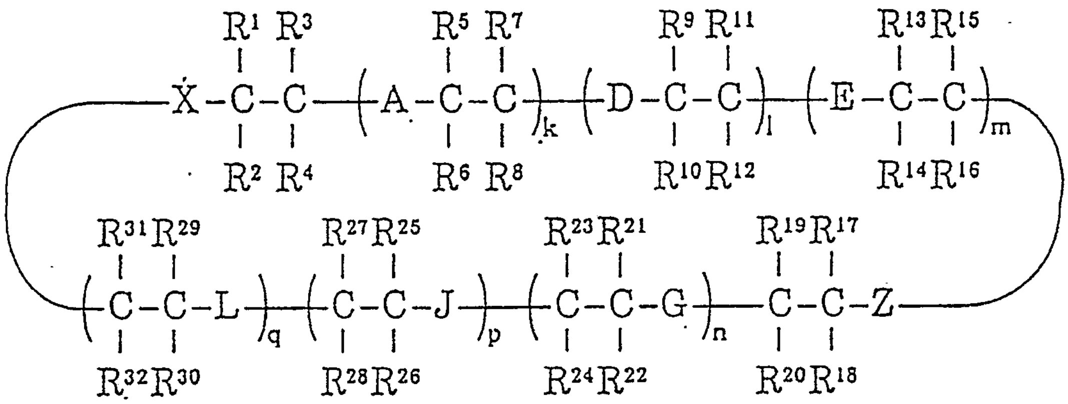

(I)

wherein $R^1$ to $R^{32}$ each represents a hydrogen atom, an alkyl group, an alkoxy group, an alkoxyalkyl group, an arylalkyl group or an alkenyl group; a pair of $R^1$ and $R^3$, or $R^2$ and $R^4$, a pair of $R^5$ and $R^7$, or $R^6$ and $R^8$, a pair of $R^9$ and $R^{11}$, or $R^{10}$ and $R^{12}$, a pair of $R^{13}$ and $R^{15}$, or $R^{14}$ and $R^{16}$, a pair of $R^{17}$ and $R^{19}$, or $R^{18}$ and $R^{20}$, a pair of $R^{21}$ and $R^{23}$, or $R^{22}$ and $R^{24}$, a pair of $R^{25}$ and $R^{27}$, or $R^{26}$ and $R^{28}$, and a pair of $R^{29}$ and $R^{31}$, or $R^{30}$ and $R^{32}$ may each form a substituted or unsubstituted saturated aliphatic ring; or a group of $R^1$, $R^2$, $R^3$ and $R^4$, a group of $R^5$, $R^6$, $R^7$ and $R^8$, a group of $R^9$, $R^{10}$, $R^{11}$ and $R^{12}$, a group of $R^{13}$, $R^{14}$, $R^{15}$ and $R^{16}$, a group of $R^{17}$, $R^{18}$, $R^{19}$ and $R^{20}$, a group of $R^{21}$, $R^{22}$, $R^{23}$ and $R^{24}$, a group of $R^{25}$, $R^{26}$, $R^{27}$ and $R^{28}$, and a group of $R^{29}$, $R^{30}$, $R^{31}$ and $R^{32}$ may each form a substituted or unsubstituted aromatic ring; A, D, E, G, J, L, X, and Z each represents an oxygen atom, a sulfur atom,

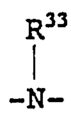 , 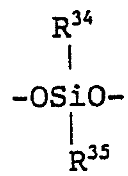

or

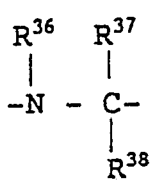

(wherein $R^{33}$ to $R^{38}$ each represents a hydrogen atom, an alkyl group, an alkoxy group, an alkoxyalkyl group, an arylalkyl group or an alkenyl group; or $R^{36}$ and $R^{37}$ may form a nitrogen-containing heterocyclic ring), provided that when A, D, E, G, J, L, X or Z is

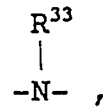

$R^{33}$ may be connected to a substituent on the carbon atom adjacent to the group to form a nitrogen-containing heterocyclic ring; or when X and Z both represent

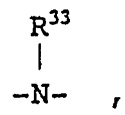

with A, D, E, G, J and L representing other atoms or groups, $-R^{33}$ in X and Z may be connected to each other to represent $-C_2H_4(OC_2H_4)_t-$ (wherein t represents an integer of from 1 to 5); or when X represents

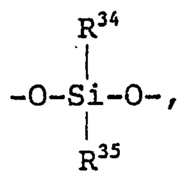 A, D, E, G, J, L, and Z

each represents an oxygen atom; and k to q each represents 0 or an integer of from 1 to 5, provided that the sum of k to q does not exceed 12.

3. A liquid crystal composition as described in Claim 2, wherein A, D, E, G, J, and L each represents an oxygen atom.

4. A liquid crystal composition as described in Claim 3, wherein X and Z both represent an oxygen atom.

5. A liquid crystal composition as described in Claim 4, wherein a pair of $R^1$ and $R^3$, or $R^2$ and $R^4$ and/or a pair of $R^{17}$ and $R^{19}$, or $R^{18}$ and $R^{20}$ are each connected together to form a substituted or unsubstituted saturated aliphatic ring; or at least one of a group of $R^1$, $R^2$, $R^3$ and $R^4$ and a group of $R^{17}$, $R^{18}$, $R^{19}$ and $R^{20}$ are taken together to form a substituted or unsubstituted aromatic ring.

6. A liquid crystal composition as described in Claim 5, wherein at least one of a group of $R^1$, $R^2$, $R^3$ and $R^4$ and a group of $R^{17}$, $R^{18}$, $R^{19}$ and $R^{20}$ are taken together to form a substituted or unsubstituted phenyl group.

7. A liquid crystal composition as described in Claim 5, wherein a pair of $R^1$ and $R^3$, or $R^2$ and $R^4$ and/or a pair of $R^{17}$ and $R^{19}$, or $R^{18}$ and $R^{20}$ are each connected together to form a substituted or unsubstituted cyclohexyl group.

8. A liquid crystal composition as described in Claim 4, wherein the sum of k, l, and m (k+l+m) and the sum of n, p, and q (n+p+q) are equal.

9. A liquid crystal composition as described in Claim 4, wherein $R^1$ to $R^{32}$ each represents a hydrogen atom.

10. A liquid crystal composition as described in Claim 4, wherein the sum of k to q is from 2 to 8.

**11.** A liquid crystal composition as described in Claim 10, wherein the sum of k to q is from 1 to 4.

**12.** A liquid crystal composition as described in Claim 10, wherein the sum of k, l, and m (k+l+m) or the sum of n, p, and q (n+p+q) is from 1 to 4.

**13.** A liquid crystal composition as described in Claim 3, wherein X and Z each represents

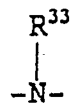

(wherein $R^{33}$ represents a hydrogen atom, an alkyl group, an alkoxy group, an alkoxyalkyl group, an arylalkyl group or an alkenyl group; or $R^{33}$ in X and Z are taken together to form $-C_2H_4(OC_2H_4)_t-$ (wherein t represents an integer of from 1 to 5)).

**14.** A liquid crystal composition as described in Claim 13, wherein $R^{33}$ represents a hydrogen atom or an alkyl group.

**15.** A liquid crystal composition as described in Claim 13, wherein $R^{33}$ are taken together to form $-C_2H_4-(OC_2H_4)_t-$ (wherein t is as defined above).

**16.** A liquid crystal composition as described in Claim 13, wherein the sum of k, l, and m (k+l+m) and the sum of n, p, and q (n+p+q) are equal.

**17.** A liquid crystal composition as described in Claim 13, wherein k, m, n and q are equal; l and p each represents 1; and a pair of $R^9$ and $R^{11}$, or $R^{10}$ and $R^{12}$ and/or a pair of $R^{25}$ and $R^{27}$, or $R^{26}$ and $R^{28}$ are connected to each other to form a substituted or unsubstituted saturated aliphatic ring; or at least one of a group of $R^9$, $R^{10}$, $R^{11}$ and $R^{12}$ and a group of $R^{25}$, $R^{26}$, $R^{27}$ and $R^{28}$ are taken together to form a substituted or unsubstituted aromatic ring.

**18.** A liquid crystal composition as described in Claim 17, wherein at least one of a group of $R^9$, $R^{10}$, $R^{11}$ and $R^{12}$ and a group of $R^{25}$, $R^{26}$, $R^{27}$ and $R^{28}$ are taken together to form a substituted or unsubstituted phenyl group.

**19.** A liquid crystal composition as described in Claim 17, wherein a pair of $R^9$ and $R^{11}$, or $R^{10}$ and $R^{12}$ and/or a pair of $R^{25}$ and $R^{27}$, or $R^{26}$ and $R^{28}$ are connected to each other to form a substituted or unsubstituted cyclohexyl group.

**20.** A liquid crystal composition as described in Claim 13, wherein $R^1$ to $R^{32}$ each represents a hydrogen atom.

**21.** A liquid crystal composition as described in Claim 13, wherein the sum of k to q is from 2 to 8.

**22.** A liquid crystal composition as described in Claim 21, wherein the sum of k to q is from 1 to 4.

**23.** A liquid crystal composition as described in Claim 21, wherein the sum of k, l, and m (k+l+m) or the sum of n, p, and q (n+p+q) is from 1 to 4.

**24.** A liquid crystal composition as described in Claim 3, wherein X represents

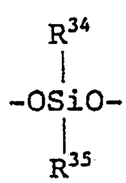

(wherein $R^{34}$ and $R^{35}$ are as defined above); and Z represents an oxygen atom.

**25.** A liquid crystal composition as described in Claim 24, wherein $R^{34}$ and $R^{35}$ each represents a hydrogen atom, an alkyl group, an alkoxy group or an alkenyl group.

**26.** A liquid crystal composition as described in Claim 24, wherein $R^1$ to $R^{32}$ each represents a hydrogen atom.

**27.** A liquid crystal composition as described in Claim 24, wherein the sum of k to q is from 0 to 6.

**28.** A liquid crystal composition as described in Claim 3, wherein X and/or Z represent(s) a sulfur atom.

**29.** A liquid crystal composition as described in Claim 2, wherein A, D, E, G, J, L, X, and Z each represents

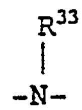

(wherein $R^{33}$ represents a hydrogen atom, an alkyl group, an alkoxy group, an alkoxyalkyl group, an arylalkyl group or an alkenyl group, or $R^{33}$ in X and Z may be taken together to form $-C_2H_4(OC_2H_4)_t-$ (wherein t represents an integer of from 1 to 5)).

**30.** A liquid crystal composition as described in Claim 2, wherein k and n each represents 1; l and m and/or p and q both represent 0 or 1; A, E, G and L each represents

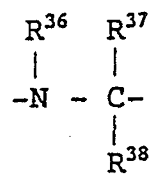 ;

and X, D, Z and J each represents

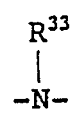

(wherein $R^{33}$ to $R^{38}$ each represents a hydrogen atom, an alkyl group, an alkoxy group, an alkoxyalkyl group, an arylalkyl group or an alkenyl group, or $R^{33}$ in X and Z are taken together to form $-C_2H_4-(OC_2H_4)_t-$ (wherein t represents an integer of from 1 to 5)).

**31.** A liquid crystal composition as described in Claim 2, wherein k and m both represent 1; l and n both represent 2; p and q both represent 2 or 0; D, G, and L each represents

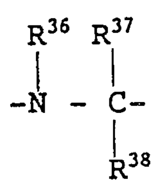 ;

and X, A, E, Z, and J each represents

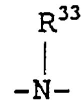

(wherein $R^{33}$ to $R^{38}$ each represents a hydrogen atom, an alkyl group, an alkoxy group, an alkoxyalkyl group, an arylalkyl group or an alkenyl group, or $R^{33}$ in X and Z may be taken together to form $-C_2H_4-(OC_2H_4)_t-$ (wherein t represents an integer of from 1 to 5)).

**32.** A liquid crystal composition as described in Claim 2, wherein A, D, E, G, J, L, X, and Z each represents

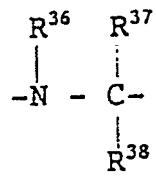

(wherein $R^{33}$ to $R^{38}$ each represents a hydrogen atom, an alkyl group, an alkoxy group, an alkoxyalkyl group, an arylalkyl group or an alkenyl group.

**33.** A liquid crystal composition as described in Claim 32, wherein $R^{36}$ represents a hydrogen atom or an alkyl group.

**34.** A liquid crystal composition as described in Claim 32, wherein $R^{37}$ and $R^{38}$ each represents a hydrogen atom.

**35.** A liquid crystal composition as described in Claim 32, wherein $R^1$ to $R^{32}$ each represents a hydrogen atom.

**36.** A liquid crystal composition as described in Claim 32, wherein the sum of k to q is from 0 to 8.

**37.** A liquid crystal composition as described in Claim 30, wherein $R^{36}$ represents a hydrogen atom or an alkyl group.

**38.** A liquid crystal composition as described in Claim 30, wherein $R^{37}$ and $R^{38}$ each represents a hydrogen atom.

**39.** A liquid crystal composition as described in Claim 30, wherein $R^1$ to $R^{32}$ each representss a hydrogen atom.

**40.** A liquid crystal composition as described in Claim 29, wherein the sum of k to q is from 0 to 8.

**41.** A liquid crystal composition as described in Claim 1, wherein the cyclic ether compound is present in an amount of from 0.1 to 5.0% by weight based on the liquid crystal compound.

**42.** A liquid crystal composition as described in Claim 1, wherein the composition has a specific resistance of not more than $10^{11}$ Ω.cm.

**43.** A liquid crystal composition as described in Claim 1, wherein the liquid crystal compound is at least one compound selected from cyclohexylcyclohexane compounds, phenylcyclohexane compounds, biphenyl compounds, terphenyl compounds, cyclohexylcyclohexanoate compounds, phenylcyclohexylcarboxylate compounds, ester compounds, diester compounds, cyclohexylbiphenyl compounds, biphenylcyclohexylcarboxylate compounds, biphenyl ester compounds, thioester compounds, Schiff

compounds, pyrimidine compounds, pyridine compounds, dioxane compounds, cyclohexylmethyl ether compounds, cinnamonitrile compounds, pyridazine compounds, and bibenzyl compounds.

**44.** A liquid crystal composition as described in Claim 1, wherein the liquid crystal compound mainly comprises a phenylcyclohexane compound.

**45.** A liquid crystal composition as described in Claim 1, wherein the composition further contains a dichroic dye.

**46.** A liquid crystal element characterized by comprising a pair of substrates at least one of which has a transparent electrode, and a liquid crystal composition containing a liquid crystal compound and at least one cyclic ether compound, said liquid crystal composition being supported between said substrates.

Fig. 1

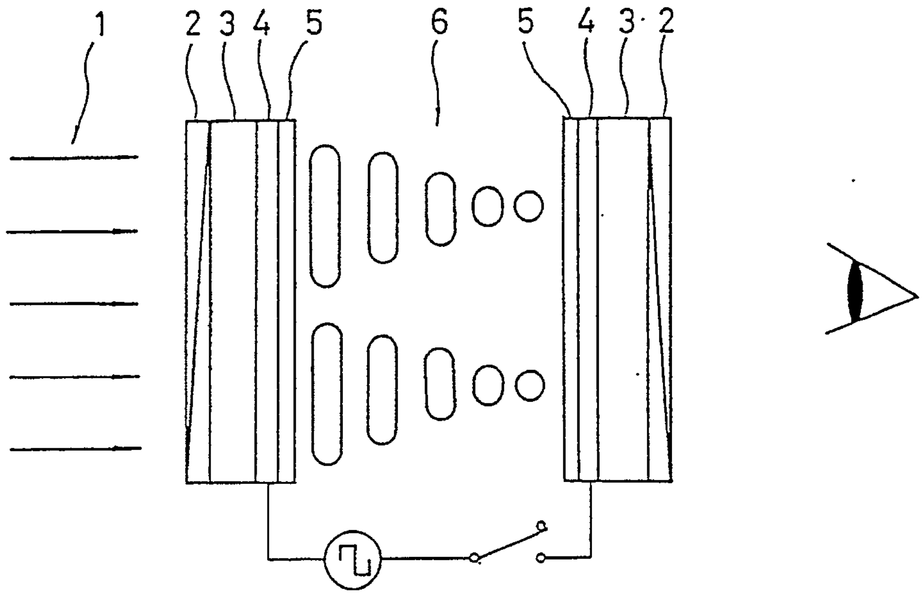


Fig. 2

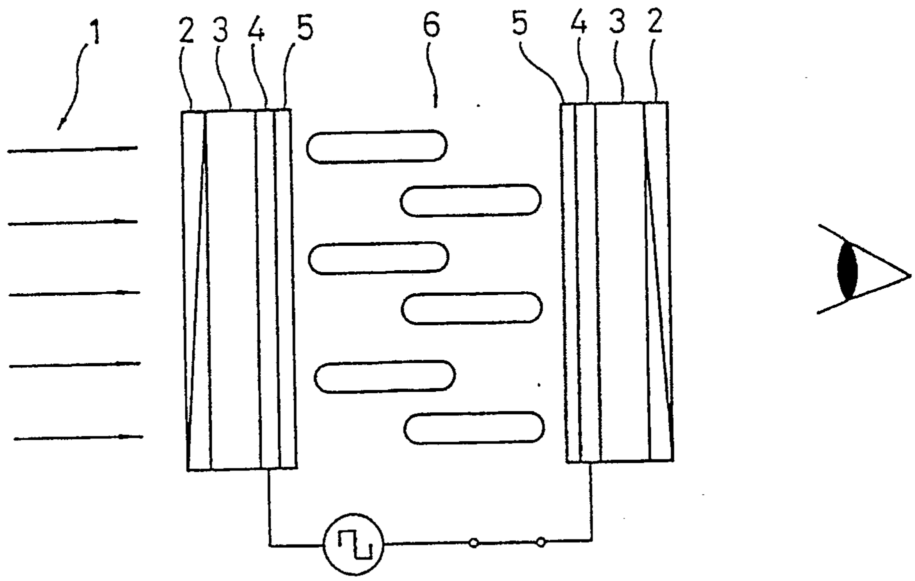

# INTERNATIONAL SEARCH REPORT

International Application No PCT/JP90/00675

**I. CLASSIFICATION OF SUBJECT MATTER** (if several classification symbols apply, indicate all) [6]

According to International Patent Classification (IPC) or to both National Classification and IPC

Int. $Cl^5$ C09K19/54, G02F1/13-137

**II. FIELDS SEARCHED**

Minimum Documentation Searched [7]

| Classification System | Classification Symbols |
|---|---|
| IPC | C09K19/54-58, G02F1/13-137 |

Documentation Searched other than Minimum Documentation to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, A, 60-23378 (Merch Patent GmbH), 5 February 1985 (05. 02. 85), Claim & DE, A, 3322982 & US, A, 4755323 | 1 - 46 |
| A | JP, A, 51-68483 (Toshiba Chemical Corp.), 14 June 1976 (14. 06. 76), Claim (Family: none) | 1 - 46 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| August 13, 1990 (13. 08. 90) | August 27, 1990 (27. 08. 90) |
| **International Searching Authority** | **Signature of Authorized Officer** |
| Japanese Patent Office | |